**Europäisches Patentamt**

**European Patent Office**

**Office européen des brevets**

(11) Publication number: **0 347 498**

**A1**

# EUROPEAN PATENT APPLICATION

(21) Application number: **88305666.5**

(22) Date of filing: **21.06.88**

(51) Int. Cl.⁴: **A01D 87/00 , E02F 3/34 , E02F 3/627**

(43) Date of publication of application:
**27.12.89 Bulletin 89/52**

(84) Designated Contracting States:
**DE FR GB IT**

(71) Applicant: **Hildyard, John Thoroton**
**Gardners Cottage**
**Papplewick Nottingham NG15 8FE(GB)**

(72) Inventor: **Hildyard, John Thoroton**
**Gardners Cottage**
**Papplewick Nottingham NG15 8FE(GB)**

(74) Representative: **Curtis, Philip Anthony et al**
**Eric Potter & Clarkson 14 Oxford Street**
**Nottingham NG1 5BP(GB)**

(54) **An Attachment for a vehicle.**

(57) An attachment (1) for a vehicle (2) of the type having front and rear axles (10, 10a). The attachment 1) comprises an arm (3) adapted to be secured to a tool (17), and securing means (4) adapted to secure the arm (3) at a first point (9) above the front axle (10) of the vehicle (2). The horizontal distance between the front axle (10) and the first point (9) is less than substantially one third of the distance between the front and rear axles (10, 10a). This enables the weight of the attachment (1) to be concentrated over the front axle (10).

*Fig. 1*

EP 0 347 498 A1

This invention relates to an attachment for a vehicle. More particularly the invention relates to an attachment for an agricultural vehicle such as a tractor.

An attachment of the type that is used with tractors usually comprises two arms, each arm comprising two arm members pivotally connected together; hydraulic rams are usually provided to pivot the arm members. The arms are mounted on the front of the tractor and, for the purposes of support, are attached to the tractor body between the front and rear axles. A bucket or other implement for loading material may be attached to the free ends of the arms. This general type of arrangement is shown in GB-A-821, 359, GB-A-859,919 and GB-A-1,068,711.

The operation of the attachment depends upon the type of tool with which it is used. When the tool is a bucket the attachment is operated to collect the material from one place, to carry it to another and to deposit it there. A disadvantage of such attachments is that with heavy material a large strain is put on the tractor body when the material is being carried. Furthermore, in order to lift the material a large distance above the ground, for example to load material into a high sided lorry, long arms are required. This creates large lifting moments in the arms which puts the tractor body under great strain; it also results in the arms extending a long way forward of the tractor when in a horizontal position.

Another disadvantage of this type of attachment is that, due to its construction, it can only be mounted on the front of the tractor.

It is an object of this invention to provide an improved attachment for a vehicle, particularly an agricultural vehicle such as a tractor.

It is a further object of this invention to provide a multi-purpose attachment for a vehicle.

According to a first aspect of this invention there is provided an attachment for a vehicle of the type having front and rear axles, said attachment comprising an arm adapted to be secured to a tool, and securing means adapted to secure the arm at a first point above the front axle of the vehicle, the horizontal distance between the front axle and said first point being less than substantially one third of the distance between the front and rear axles.

Preferably said horizontal distance is less than one fifth, preferably less than one tenth of the distance between the front and rear axles.

The best results are achieved when the attachment is mounted substantially directly above the front axle.

The securing means can also act as support means for supporting the or each arm on the vehicle.

In a preferred embodiment the securing means is adapted to removably secure the arm selectively to a forward or a rearward part of the vehicle, whereby the arm can be used to manipulate the tool selectively at the front or rear of the vehicle.

Advantageously the securing means is adapted to secure the arm to the vehicle at a second point disposed between the first point and the rear axle.

The weight of the arm can be transferred to the vehicle through said first and second points.

Desirably the securing means includes a first load transferring member adapted to be secured between the arm and the first point.

The first load transferring member may be adapted to be pivotally secured to the vehicle.

Desirably also, the securing means includes a second load transferring member adapted to be secured between the arm and the second point.

Preferably the second load transferring member is resiliently deformable. Most preferably, the second load transferring member comprises a leaf spring.

Each arm may comprises first and second arm members, which may be pivotally secured to one another.

The first arm member may be pivotally secured to the first and second load transferring member, whilst the second arm member may be adapted to be secured to the tool.

First pivotting means in the form of a first hydraulic ram may be provided to pivot the first arm member relative to the securing means. Second pivotting means in the form of a second hydraulic ram may be provided to pivot the second arm member relative to the first arm member. Third pivotting means in the form of a third hydraulic ram may be provided to pivot the tool relative to the second arm member.

The first and/or second arm member may comprise first and second portions which are telescopically arranged, whereby the length of the first and/or second arm members can be altered.

Typically two of said arms are provided, the arms being adapted to be disposed on opposite sides of the vehicle. It will be appreciated that when two arms are provided, then all the features described above in respect of one arm can be provided for each arm.

The or each arm is preferably adapted to be pivotally movable relative to the vehicle.

Tools which are suitable for use with this invention include buckets, pallet arms and muck forks. These tools are normally used to carry materials and, with the arms of the attachment, the tools can be used to lift the materials for loading purposes.

Another tool which can be used is a plough or cultivator.

Having the attachment pivotally mounted to the front of the vehicle near the front axle, allows a substantial part of a load on the arms to be transmitted to the front axle. Thus, larger amounts of material can be lifted to higher loading positions. Also, unlike in previous constructions, it is not necessary to reinforce the tractor body midway along the length thereof.

The leaf spring is advantageous since it acts to absorb the loads on the attachment.

The ability to secure the attachment to the forward or rearward parts of the vehicle is advantageous since it obviates the necessity of having two different attachments for using the arm at the front and the rear.

The attachment may further include ground-engaging means to facilitate movement of the attachment over the ground; the ground-engaging means may comprise, for example, wheels or rollers.

The securing means preferably includes transmission means adapted to transmit loads directly from the second arm member to the vehicle through the securing means.

Desirably the transmission means comprises an abutment provided on the first load transferring member.

The advantage of the transmission means is that it provides a greater degree of support for loads on the tool and it can prevent part of the load on the tool from being transferred through the pivotal connection between the first and second arm members; this allows larger loads to be manipulated.

The transmission means also allows tools which are normally attached to the rear of the vehicle for towing purposes to be attached to the front of the vehicle. Such tools include ploughs or cultivators. The tool can be pushed by the vehicle and the load on the arrangement is transmitted to the vehicle directly through the support means, with very little of the load being taken through the arm members.

When the arrangement is used to push a tool as above, the rear of the tool may be disposed adjacent the front of the vehicle, and the front of the tool may be disposed away from the vehicle.

Elongate securing members may be provided to secure the front of the tool to the arms. Three such elongate members may be provided for three point securing of the tool to the arms.

The transmission means may include locking means to lock the arms in a retracted position.

Preferably the position at which the pivotting means is secured to the or each arm is adjustable.

One device which can be lifted by the attachment is a hay bale carrier. The attachment enables much larger loads to be carried by the carrier than has previously been possible. For example, the carrier can be arranged to carry eight tiers of bales rather than the standard four tiers which are usually carried.

The carrier is advantageously adapted to pick the bales up by squeezing them on each side and also at a front end thereof. A member may be provided for squeezing the bales at the front. When the carrier is fully loaded it can be carried by the attachment on the vehicle.

A calor gas burner may also be provided on the attachment for use with straw burning.

According to a second aspect of the invention there is provided an attachment for a vehicle of the type having front and rear axles, said attachment comprising an arm adapted to be secured to a tool and securing means adapted to removably secure the arm selectively to a forward or a rearward part of the vehicle, whereby the arm can be used to manipulate the tool selectively at the front or rear of the vehicle.

According to a third aspect of the invention there is provided an attachment for a vehicle of the type having front and rear axles, said attachment comprising an arm adapted to be secured to a tool, and securing means adapted to secure the or each arm to the vehicle, said securing means including a leaf spring adapted to be disposed between the arm and the vehicle.

According to a fourth aspect of the invention there is provided an attachment for a vehicle of the type having front and rear axles, the attachment comprising an arm having a first arm member adapted to be secured to the vehicle, and a second arm member adapted to be secured to a tool the first and second arm members being pivotally secured, securing means for securing the first arm member to the vehicle, and transmission means on the securing means for transmitting loads applied to the second arm member directly to the vehicle through the securing means.

According to a fifth aspect of the invention there is provided an attachment for a vehicle, comprising an arm adapted to be secured to a tool, and securing means for securing the or each arm to the vehicle, wherein the or each arm comprises at least one arm member having two portions arranged telescopically relative to one another, whereby the length of the arm member can be altered.

It will be appreciated that the attachment according to the second, third, fourth or fifth aspects of the invention can be provided with any combination of the features described above.

According to a sixth aspect of the invention there is provided a vehicle having an attachment as described above provided thereon.

As explained above, the present invention enables the attachment to be used to raise a tool to a high level. This may involve raising a tool such as a bucket to a level such that it can discharge a load into a high sided lorry. There is a problem with this in that it is often difficult for the load to be emptied because the bucket cannot pivot through the necessary angle to empty the load.

The present invention provides a simple and economical solution to this problem in the form of a particular means to attach the tool to the arm.

This means may include a first pivotting member pivotally secured to the arm at an arm pivot axis, and pivotally secured to the tool at a tool pivot axis. A second pivotting member may be pivotally secured to the arm at the arm pivotting axis. Pivotting means may be provided for pivotting the first and second pivotting member about the arm pivot axis; the pivotting means may be equivalent to the third pivotting means described above.

A connecting member may be secured between the second pivotting member and the tool.

Fixing means may be provided to fix either: (a) the first pivotting member relative to the second pivotting member whereby the pivotting means can pivot the first and second pivotting members about the arm pivot axis thereby causing pivotting of the tool about the arm pivot axis, or (b) the first pivotting member relative to the arm whereby the pivotting means can pivot the second pivotting member and the connecting member relative to the arm pivot axis thereby causing pivotting of the tool about the tool pivot axis.

The means for attaching the tool can be used with any of the embodiments of the attachment described above. The means for attaching the tool can also be used with any conventional attachment which includes at least one arm, and securing means for securing the arm to a vehicle.

Reference is now made to the accompanying drawings, in which:-

Figure 1 is a schematic diagram of one embodiment of an attachment according to the invention on a forward part of a tractor;

Figure 2 is a schematic diagram of the embodiment of attachment shown in Figure 1 on a rearward part of the tractor;

Figure 3 is a further schematic diagram of the embodiment of attachment shown in Figure 1 on the forward part of the tractor;

Figure 4 is a schematic diagram of a further embodiment of attachment according to the invention on the rearward part of the tractor;

Figure 5 is a schematic diagram of a further embodiment of attachment according to the invention on the forward part of the tractor;

Figure 6 is a fourth schematic diagram of the embodiment of attachment shown in Figure 5 on the forward part of the tractor;

Figure 7 is a schematic diagram of a further embodiment of attachment according to the invention on the forward part of the tractor;

Figure 8 is a cross-sectional view of means for attaching a tool to an attachment, according to the invention;

Figure 9 is a view along lines 9-9 of Figure 8; and

Figure 10 is a view corresponding to the view shown in Figure 8, and also showing a tool.

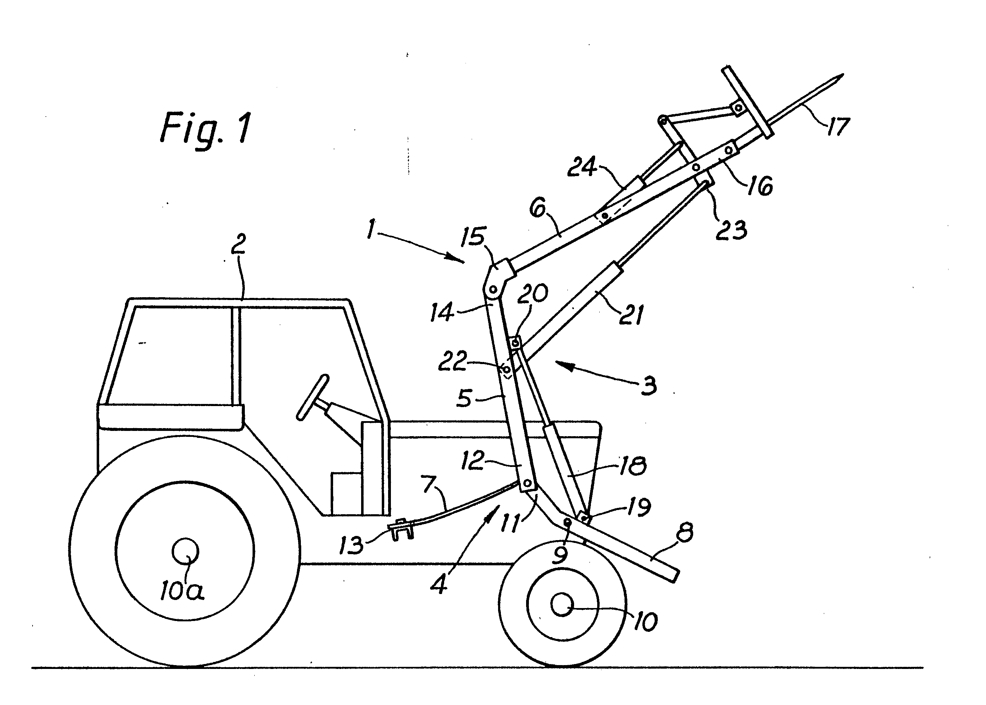

Referring to Figure 1 an attachment generally designated 1 is shown on a forward part of a vehicle in the form of a tractor 2. The attachment 1 comprises a pair of spaced arms 3 and securing means 4 for securing the arms 3 to the tractor 2. The arms 3 and the securing means 4 are provided on both sides of the tractor 2.

Each arm 3 comprises first and second arm members 5 and 6 respectively. The securing means 4 includes first and second securing members 8 and 7 respectively; the second securing member 7 is in the form of a leaf spring. The first and second securing members 7 and 8 serve to support the arm members 5 and 6 above the tractor.

The first securing member 8 is pivotally mounted at a first point 9 at the front of the tractor 2; the first point 9 is disposed substantially above a front axle 10 of the tractor 2.

A first end 11 of the first securing member 8 is pivotally secured to a first end 12 of the first arm member 5. The second securing member 7 is secured to the first securing member 8 at the end 11 thereof and to the tractor 2 at a second point 13. As shown, the second point 13 is disposed between the first point 9 and a rearward axle 10a.

A second end 14 of the first arm member 5 is pivotally secured to a first end 15 of the second arm member 6. A second end 16 of the second arm member 6 is pivotally secured to a tool 17. The tool 17 can be in the form of, for example, a muck fork, a bucket or pallet arms.

First pivotting means in the form of a hydraulic ram 18 is provided to lift or lower the first arm member 5. The ram 18 is secured to the second securing member 8 at mounting 19 and to the first arm member 5 at mounting 20.

Second pivotting means in the form of a hydraulic ram 21 is provided to lift or lower the second arm member 6. The hydraulic ram 21 is secured to the first arm member 5 at mounting 22 and to the second arm member 6 at mounting 23.

Third pivotting means in the form of a hydraulic ram 24 is provided to alter the orientation of the tool 17.

The first and second securing members 8 and 7 act as load transferring members. The first support member 8 transfers the part of the load of the attachment 1 directly to the point 9, whilst the second support member 7 transfers the rest of the

4

load of the attachment 1 directly to the point 13. This results in a triangular distribution of forces on the tractor 2.

The attachment 1 is removably secured to the front of the tractor 2.

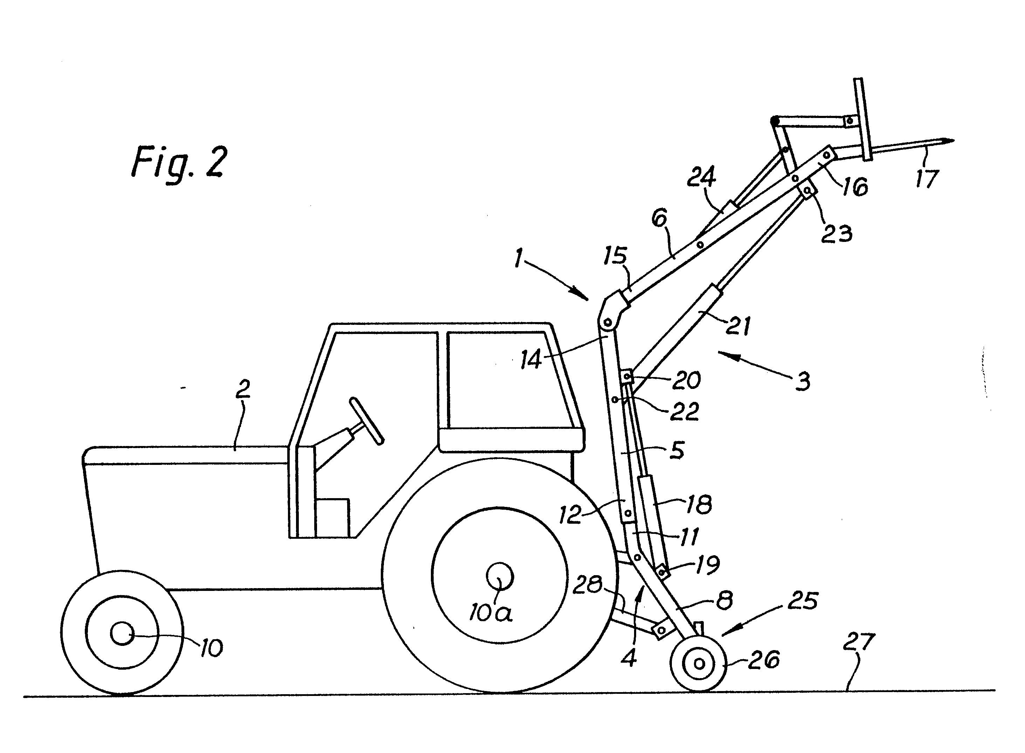

Referring now to Figure 2, the attachment 1 is shown attached to a rearward part of the tractor 2.

Features shown in Figure 2 which are the same as in Figure 1 are labelled with the same reference number.

When the attachment 1 is on the rear of the tractor 2 the second securing member 7 is not used. A ground-engaging device 25 is provided which includes wheels 26. The ground-engaging device 25 engages the ground 27 and provides further support for the attachment 1.

The first securing member 8 is secured to the vehicle by means of securing elements 28.

In operation, the attachment 1 can be used to load materials onto trucks, trailers or in other situations where it is necessary to lift material from one place to another.

The rams 18 and 21 lift or lower the first and second arm members 5 and 6 respectively. Thus, the tool 17, which carries the material, is manipulated as desired.

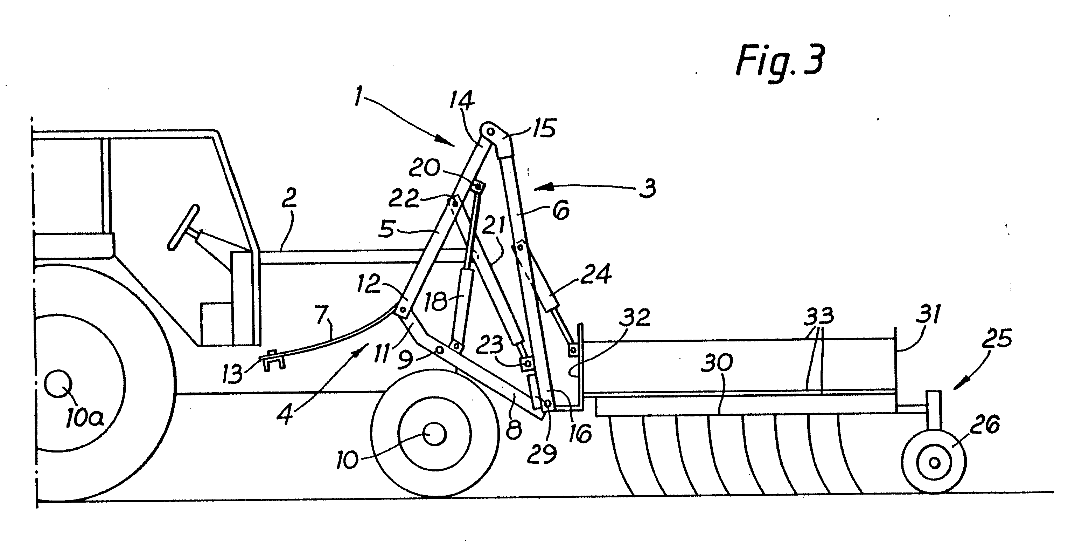

Referring to Figure 3 an attachment 1 is shown in which the arm members 5 and 6 are shown in a retracted position. The features of Figure 3 which are the same as Figure 1 have been provided with the same reference numbers.

Transmission means in the form of an abutment 29 is provided which includes locking means to lock the second arm member 6 in the retracted position to the first securing member 8. The second arm member 6 is secured to a tool, which in this case is in the form of a plough or cultivator 30. The cultivator 30 is of the type that has a front end 31 which is normally attached to the rear of the tractor 2. In normal operation, the cultivator 30 is towed by the tractor 2.

In operation with the attachment 1, the rear 32 of the cultivator 30 is disposed adjacent the front of the tractor 2; the front 31 of the cultivator 30 is disposed away from the front of the tractor 2.

Elongate securing members 33 are provided to secure the front 31 of the cultivator 30 to the second arm member 6. Thus, the cultivator 30 can be pushed by the tractor.

The force of the cultivator 30 when being pushed through the earth is transmitted from the second arm member 6 to the first securing member 8 via the abutment 29.

The first securing member 8 is pivotally secured to the tractor 2 at the point 9 above the front axle 10. The force on the second arm member 6 is thus transmitted to the front axle 10 of the tractor 2 to provide a greater degree of support.

The ground-engaging device 25 with the wheels 26 is also provided to assist the tractor 2 in pushing the cultivator 30.

A tool 17 such as a muck form, pallet arms or a bucket can also be used when the second arm member 6 is secured in the retracted position by the transmission means 29.

By securing the second arm member 6 in the retracted position, the attachment 1 can be used to carry heavy materials. The weight of the material is transmitted to the front axle 10 via the first securing member 8 and the abutment 29.

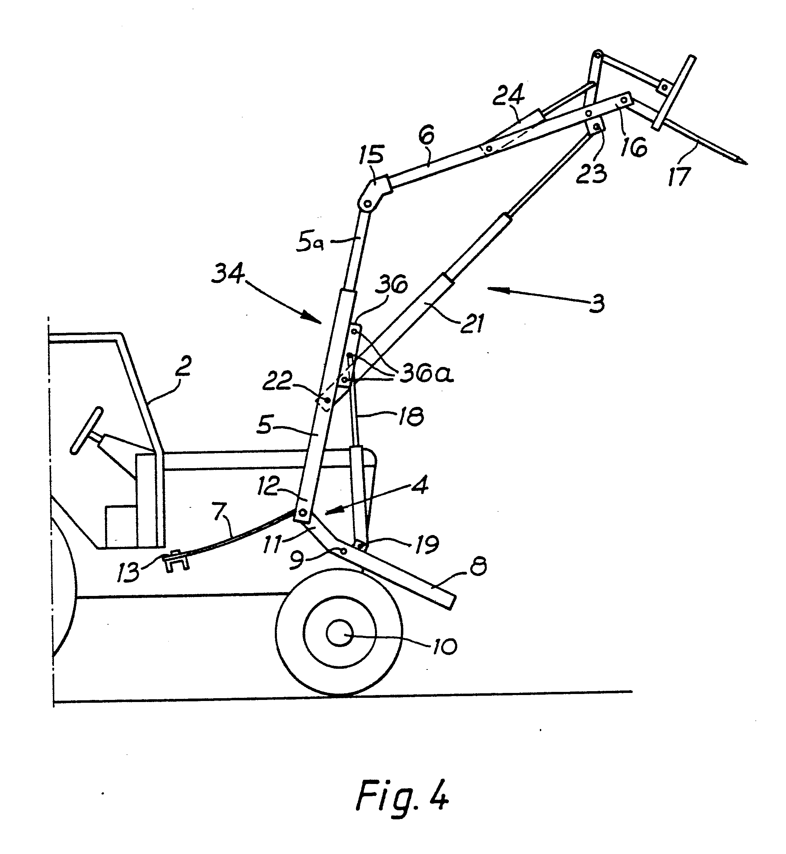

Referring to Figure 4, an attachment 34 is shown. Many of the features shown in Figure 4 are similar to those in Figure 1 and the similar features have been provided with the same reference numbers.

In Figure 4, the first arm member 5 is of adjustable length. The arm member 5 comprises first and second portions 5a and 5b which are telescopically adjustable relative to one another.

The ram 18 is adjustably secured to the first arm member 5 at a selected one of three positions 36a on a mounting 36.

These features allow the arms 3 to lift a lesser weight a large distance by extending the length of the first arm member 5 and positioning the first ram 18 at a lower position. Alternatively, the arms 3 can be adjusted to lift a large weight a small distance by reducing the length of the first arm member 6 and by positioning the first ram 18 at a higher position.

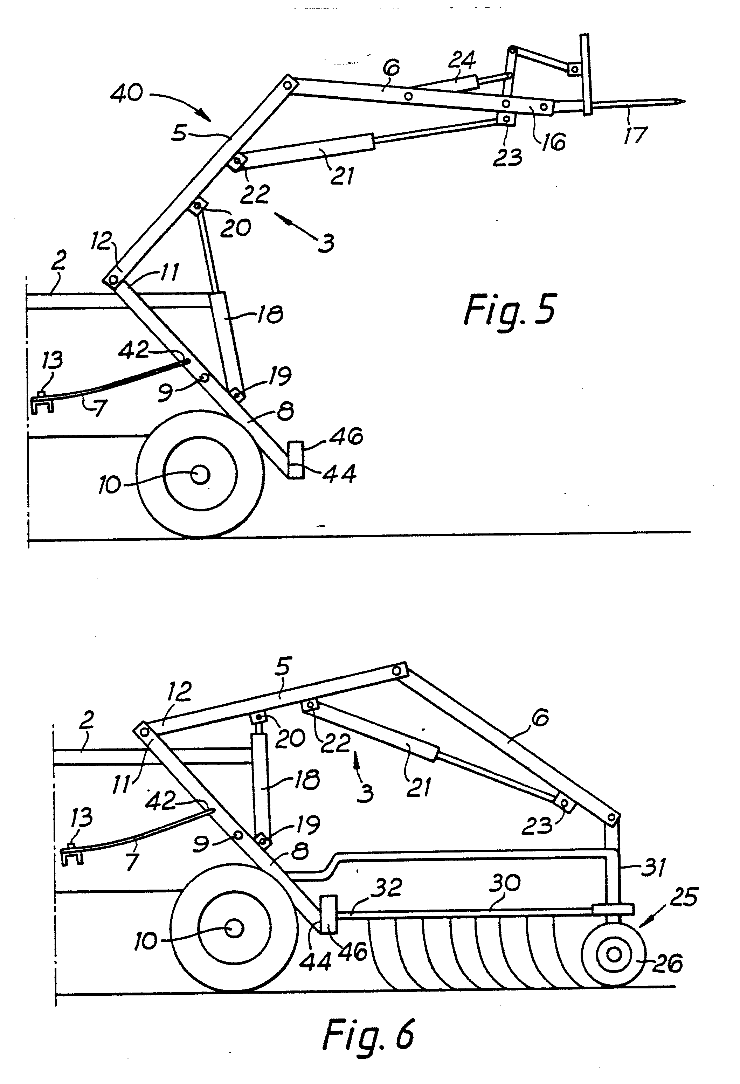

Figure 5 shows an embodiment of attachment 40 which is similar to that shown in Figure 1; like parts have been identified with like reference numerals.

In attachment 40, the second securing member 7 is secured to the first support member 8 at a point 42 which is about midway along the first support member 8.

Also a lower end 44 of the first securing member 8 is provided with transmission means in the form of an abutment 46.

Figure 6 shows the attachment 40 being used with the cultivator or plough 30.

In Figure 6 the second arm member 6 is secured to the front 31 of the cultivator 30, and the cultivator 30 directly engages the abutment 46.

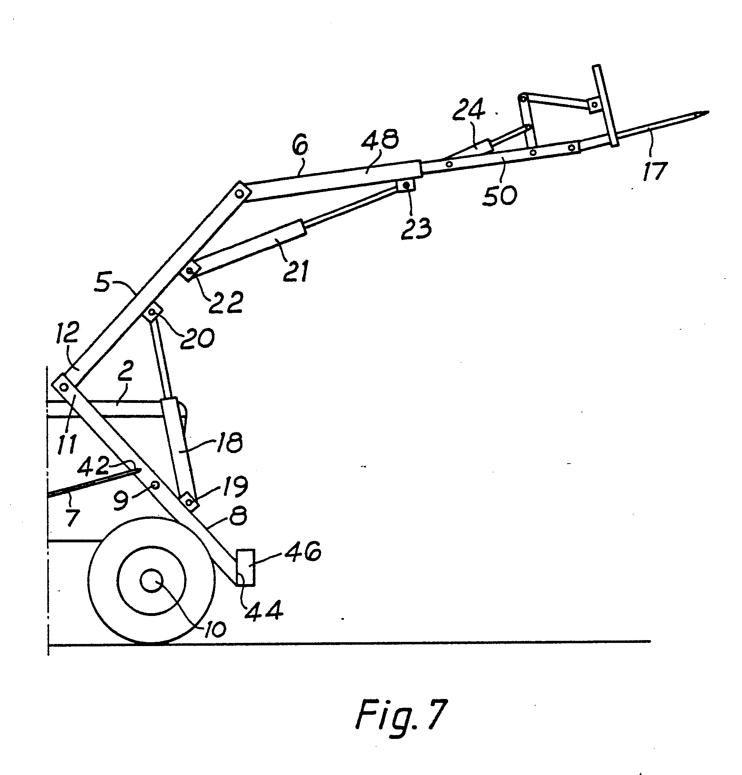

Figure 7 shows an embodiment in which the second arm member 6 comprises an adjustable length arm member consisting of two telescopically arranged first and second portions 48 and 50.

In all the above embodiments, control means (not shown) can be provided for controlling the rams 18, 21 and 24, and for controlling the telescopically adjustable portions of the arms 5 and 6.

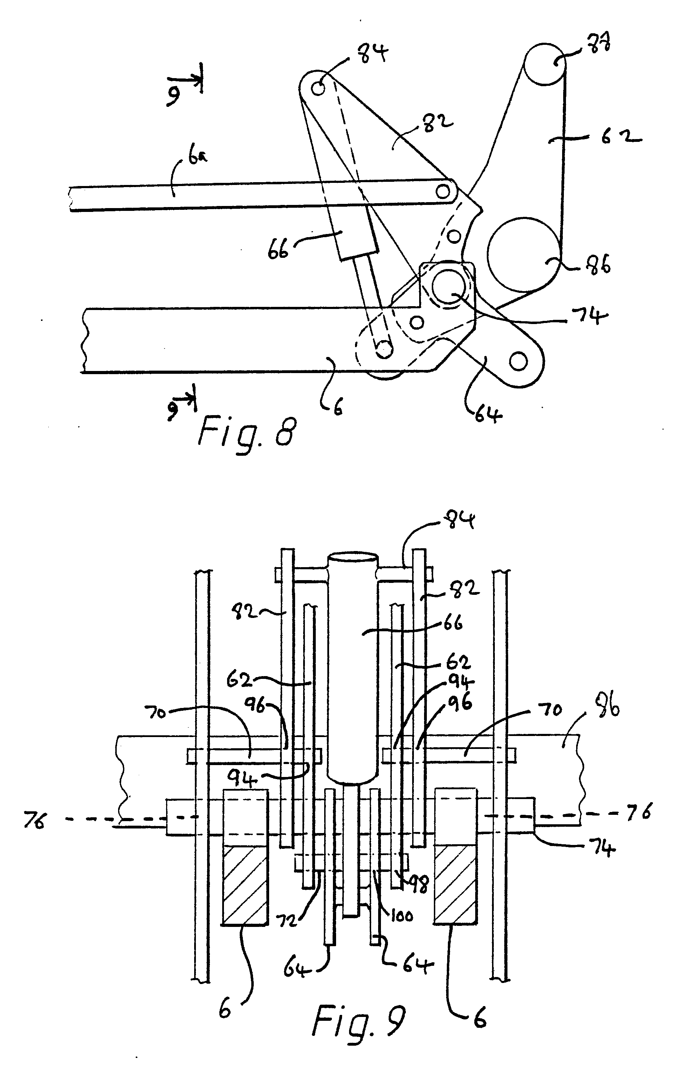

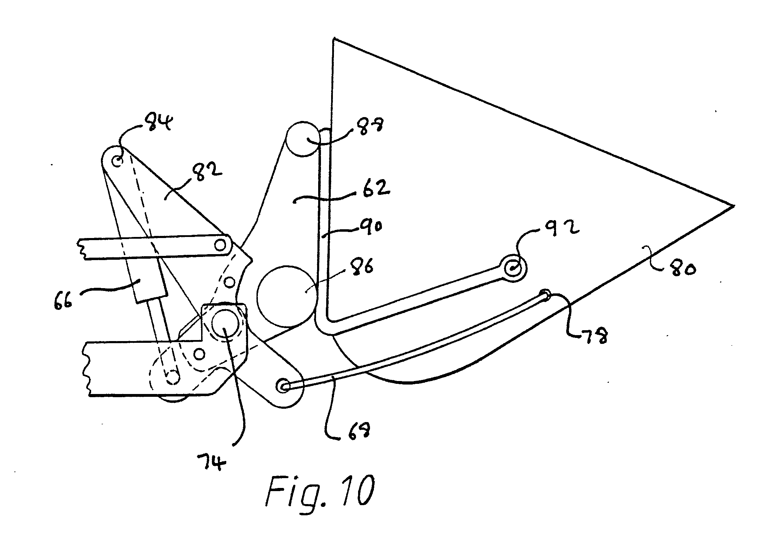

In Figures 8 to 10 there is shown means to attach a bucket 60 to the arm member 6. The arm member 6 also includes linkage arms 6a. The linkage arms 6a are not shown in Figure 9, for clarity. Certain parts shown in Figure 9 are omitted in Figures 8 and 10, for clarity.

The attachment means includes a first pivotting member 62, a second pivotting member 64, a hydraulic ram 66, a connecting member 68 (see Figure 10), and fixing pins 70 and 72; in practice the pins 70 and 72 are not used simultaneously.

The first pivotting member 62 is pivotally mounted to a shaft 74 of the arm member 6, so that the first pivotting member 62 can pivot about an arm pivot axis 76.

The second pivotting member 64 is also pivotally mounted to the shaft 74, so that the second pivotting member 64 can pivot about the arm pivot axis 76.

One end of the second pivotting member 64 is connected to an end of the ram 66, whilst the other end of the second pivotting member 64 is connected to an end of the connecting member 68. The other end of the connecting member 68 is connected to an aperture 78 in the bucket 60.

The ram 66 is provided with a ram housing 82 which is pivotally connected at one end to the ram at pivot 84, and which is pivotally connected at the other end to the shaft 74.

The first pivotting member 62 includes shafts 86 and 88, and a mounting 90 which is pivotally connected to the bucket 60 at a tool pivot axis 92.

The first pivotting member 62 is provided with apertures 94 which can be aligned with apertures 96 on the ram housing 82 to receive the pins 70. The first pivotting member 62 is additionally provided with apertures 98 which can be aligned with apertures 100 on the second pivotting member to receive the pin 72.

The pins 70 and 72 together with the corresponding apertures act as fixing means. In one position the pins 72 are in place and the pins 70 are removed. In this position the first and second members 62 and 64 are rigidly connected so that operation of the ram 66 causes pivotting of the first and second pivotting members 62 and 64 about the arm pivot axis 76. This causes the bucket 60 to tip with the first pivotting member 62 about the arm pivot axis 76 in a conventional manner.

However, when it is desired to use the bucket with, for example, high sided lorries, the pin 72 can be removed and the pins 70 can be inserted. This locks the first pivotting member 62 to the ram housing 82 and leaves the second pivotting member free to pivot relative to the first pivotting member 62 about the axis 76.

Thus, when the ram 66 is operated, the second pivotting member 64 pivots about the axis 76 relative to the first pivotting member 62. This causes the connecting member 68 to pivot the bucket 60 about the pivot point 92. Since the pivot point 92 is disposed above the pivot point 74, the bucket 60 can be pivotted more easily with high sided lorries.

**Claims**

1. An attachment for a vehicle of the type having front and rear axles, said attachment being characterised by an arm adapted to be secured to a tool, and securing means adapted to secure the arm at a first point above the front axle of the vehicle, the horizontal distance between the front axle and said first point being less than substantially one third of the distance between the front and rear axles.

2. An attachment according to Claim 1, characterised in that said horizontal distance is less than substantially one fifth, preferably less than substantially one tenth of the distance between the front and rear axles, and most preferably said horizontal distance is substantially zero.

3. An attachment according to Claim 1 or 2 characterised in that the securing means is adapted to secure the arm to the vehicle at a second point disposed between the first point and the rear axle, the weight of the arm being transferred to the vehicle through said first and/or second point.

4. An attachment according to Claim 1, 2 or 3, characterised in that said securing means includes a first load transferring member adapted to be secured between the arm and the first point, said first load transferring member is adapted to be pivotally secured to the vehicle, and the first load transferring member is rigid.

5. An attachment according to Claim 4, when dependent upon Claim 3, characterised in that said securing means includes a second load transferring member adapted to be secured between the arm and the second point, and said second load transferring member is resiliently deformable.

6. An attachment according to any preceding claim, characterised in that the securing means is adapted to removably secure the arm selectively to a forward or a rearward part of the vehicle, whereby the arm can be used to manipulate the tool selectively at the front or the rear of the vehicle.

7. An attachment according to any preceding claim, characterised in that the arm comprises first and second arm members, said first and second arm members are pivotally secured to one another, the first arm member is pivotally secured to the securing means, the second arm member is adapted to be secured to the tool, and wherein the securing means further comprises transmission means adapted to transmit loads directly from the second arm member to the vehicle through the securing means, and the transmission means comprises an abutment provided on the securing means against which the second arm member can abut.

8. An attachment according to any preceding claim characterised in that at least part of the arm comprises first and second portions which are telescopically arranged, whereby the length of said part of the arm can be altered.

9. An attachment according to any preceding claim further including means to attach the tool to the arm, said means being characterised by a first pivotting member pivotally secured to the arm at an arm pivot axis and adapted to be pivotally secured to the tool at a tool pivot axis, a second pivotting member pivotally secured to the arm at said arm pivot axis, pivotting means for pivotting the first and/or second pivotting member about the arm pivot axis, a connecting member secured to the second pivotting member and adapted to be connected to the tool, and fixing means for selectively fixing either (a) the first pivotting member relative to the second pivotting member whereby the pivotting means can pivot the first and second pivotting members about the arm pivot axis thereby causing pivotting of the tool about the arm pivot axis, or (b) the first pivotting member relative to the arm whereby the pivotting means can pivot the second pivotting member and the connecting member relative to the arm pivot axis thereby causing pivotting of the tool about the tool pivot axis.

10. An attachment according to Claim 9, wherein the fixing means comprises apertures provided in the first and second pivotting members and fixing pins adapted to pass through the apertures.

Fig. 1

*Fig. 2*

EP 0 347 498 A1

Fig.3

Fig. 4

Fig. 5

Fig. 6

*Fig. 7*

Fig. 8

Fig. 9

Fig. 10

European Patent Office

EUROPEAN SEARCH REPORT

Application Number

EP 88 30 5666

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | FR-A-2134266 (FAUCHEUX)<br>* page 4, line 16 - page 6, line 40; figures 1-7 * | 1, 2, 3, 4, 7, 9 | A01D87/00<br>E02F3/34<br>E02F3/627 |
| A | FR-A-2199042 (BOTTERO)<br>* page 3, line 11 - page 5, line 32; figures 1-4 * | 1, 6 | |
| A | FR-A-2522636 (JOUANNET)<br>* page 3, line 5 - page 6, line 12; figure 1 * | 1, 7, 8, 9 | |
| A | FR-A-1563090 (CAHEZ)<br>* page 1, right-hand column - page 2, left-hand column; figures 1, 2 * | 1, 9 | |

TECHNICAL FIELDS
SEARCHED (Int. Cl.4 )

A01D
E02F

The present search report has been drawn up for all claims

| Place of search | Date of completion of the search | Examiner |
|---|---|---|
| THE HAGUE | 21 FEBRUARY 1989 | VERMANDER R.H. |

EPO FORM 1503 03.82 (P0401)